# NEW EUROPEAN PATENT SPECIFICATION

(11) **EP 3 284 571 B2**
(45) Date of publication and mention of the opposition decision: **11.05.2022**
(45) Mention of the grant of the patent: 30.01.2019
(21) Application number: 16184300.8
(22) Date of filing: 16.08.2016
(51) Int. Cl.: B29C 45/00, B60J 10/78

(54) **WINDOW SURROUND FOR A VEHICLE AND METHOD FOR PRODUCING THE SAME.**
FENSTERRAHMEN FÜR EIN FAHRZEUG UND HERSTELLUNGSVERFAHREN
BORDURE DE FENÊTRE POUR UN VÉHICULE ET PROCÉDÉ DE PRODUCTION

(43) Date of publication of application: 21.02.2018
(73) Proprietor: Magna Engineered Glass Europe S.à.r.l., 52200 Humes Jorquenay (FR)
(72) Inventor: FEBVAY, Patrick, 52 200 Langres (FR)
(74) Representative: Zangger, Bernd

(56) References cited:
- EP-B1- 2 155 462
- CA-A1- 2 234 720
- DE-A1- 10 350 802
- DE-A1- 19 539 960
- DE-U1-202011 000 804
- US-A1- 2012 256 447
- Mercedes E-Class (Photos of the window)
- GLS "Overmolding guide.

## Description

### TECHNICAL FIELD

The invention relates to a window surround for a vehicle, a method to produce a window surround and a device for producing a window surround.

### BACKGROUND

Window surrounds, encapsulating glass panels, are used, together with the inserted glasses, as windows in vehicles and are generally known in the art.

The window surround is typically bonded to the window glass via a primer. Said differently, the window surround usually bonds to a primer, which is bonded to the glass, thereby bonding the window surround to the glass panel.

Meanwhile it is also known to construct vehicle windows without using primer. The glass is then held by form-fit, typically on three sides at the edges of the glass panel, in a frame-like manner.

It is also known that such window surrounds can be constructed using two different materials, a hard, more rigid, material that serves as a support frame to hold the glass panel by form-fit. And a second, less rigid material, that serves as a sealing to the further surrounding area of the window surround.

Such window surrounds are often produced by extrusion, but it is also known to use injection-molding techniques.

Injection-molded window surrounds are revealed by DE 195 39 960 A1 and DE 103 50 802 A1.

### SUMMARY

It is an object of the invention to specify an improved method to produce a window surround, an improved window surround and a device that is suitable to produce such improved widow surrounds. In particular, the window surround shall be adapted for better fitting to the glass panel it holds.

The object of the invention is achieved by a method to produce a window surround for a vehicle, wherein the window surround comprises a first component made of a hard first material and a second component made of a weak second material, wherein the first component constitutes a circumferential support frame for holding a window glass, wherein the second component constitutes a circumferential sealing element, wherein the first and second component are produced by multi-component injection molding, wherein after injection molding of the first component onto the window glass, the second component is molded over the first component, wherein a radial slot which extends over the whole height of the first component is formed in the first component, wherein the radial slot extends radially over at least 50% of the width of the first component in the region of the slot and wherein at least one border of the second component is constituted by a front side of the second component that is arranged on top of the first component, wherein a rib is formed on the top surface of the first component, right before the front side of the second component and extending along the border of the second component lying on top of the first component.

According to the invention the first component of the window surround is adapted to hold the glass panel circumferentially. The holding of the glass panel is achieved by a form-fit and usually includes that the glass is clamped between the outer edges of the first component support frame. After injection molding the first component and especially during its cooling, the first component tends to shrink. Due to the clamping of the glass panel at its edges, the support frame gets deformed when shrinking, especially in a manner that lifts the first component support frame from the glass panel, as has been noticed by the inventor.

To overcome this problem, a radial slot which extends over the whole height of the first component is formed in the first component, the slot extending radially over at least 50% of the width of the first component in the region of the slot. Due to this slot in the material of the support frame, the shrinkage that occurs can be intercepted by the slot and less lifting of the support frame from the glass panel occurs.

Since the support frame of the window surround has to hold the glass panel, it has essentially the form of a ring. "Radial" is therefore to be understood, in the context of this invention, as a direction from the inside of this ring to the outside of this ring, and therefore perpendicular to the circumferential support frame. The "width" of the first component in the region of the slot, is therefore the width of this ring, somewhere on its circumference, in radial direction.

If at least one border of the second component is constituted by a front side of the second component that is arranged on top of the first component, a rib is formed on the top surface of the first component, right before the front side of the second component and extending along the border. When over molding the second component on top of the first component, material leakage of the first component can occur along the borders of the second component, caused by burrs which stem from tool closing. The ribs, i.e. material walls, of the first component can serve as a countermeasure against this material leakage.

Further advantageous embodiments and developments of the invention will become apparent from the dependent claims and from the description when considered together with the figures.

The radial slot is formed in the first component advantageously before the overmolding of the second component takes place.

The radial slot advantageously has a width between 1 and 5 mm, preferably approximately 3 mm.

It is advantageous if the radial slot is produced during injection molding of the first component, especially by using a shape in the cavity of the mold, which is adapted to produce the radial slot. The shape can be a separate part that is detachable from the mold.

It is furthermore advantageous if, in a first step, the first component is insert molded on the glass panel, especially in a first cavity, and, in a second step, the second component is over molded onto the first component, especially in a different, second cavity, preferably of the same mold.

The radial slot preferably extends radially over at least 80 % of the width, advantageously over about 90 % of the width of the first component.

It is advantageous if the window surround comprises at least one essentially straight frame part, which is usual to support vehicle window glasses which are themselves not circular, and if the slot is formed in said straight part. It is possible that the window surround contains several straight parts and the slot is formed at least within one of this straight parts.

It is particularly advantageous if the slot is formed approximately in the middle of the straight part. It is also possible that more than one slot is formed in the same straight part and/or at different straight parts of the frame.

The slot is designed preferably in a way that it starts at the inside edge of the first component, i.e. at an inner side of the ring the support frame forms, and the slot ends before the outside edge of the first component, i.e. before an outer side of the ring.

The first component comprises advantageously Polypropylene (PP or PP with glass fiber GF). The second component is preferably a thermoplastic elastomer (TPE).

The object of the invention is also achieved by a window surround for a vehicle, wherein the window surround comprises a first component made of a hard first material and a second component made of a weak second material, wherein the first component constitutes a circumferential support frame for holding a window glass, wherein the second component constitutes a circumferential sealing element, wherein the first and second component are produced by multi-component injection molding, wherein after injection molding of the first component onto the window glass, the second component is molded over the first component and the window glass, wherein the first component has a radial slot which extends over the whole height of the first component, wherein the radial slot extends radially over at least 50% of the width of the first component in the region of the slot and wherein at least one border of the second component is constituted by a front side of the second component that is arranged on top of the first component, wherein the first component has a rib on its top surface, right before the front side of the second component and extending along the border of the second component lying on top of the first component.

Naturally a window surround according to the invention can have all the features that have been described for the method to produce the window surround.

The object of the invention is also achieved by a device for producing a window surround for a vehicle, wherein the window surround comprises a first component made of a hard first material and a second component made of a weak second material, wherein the first component constitutes a circumferential support frame for holding a window glass, wherein the second component constitutes a circumferential sealing element, wherein the device comprises a first cavity with a first injection unit for injection molding the first component onto the window glass and the device comprises a second cavity with a second injection unit for over molding the second component onto the first component, wherein the first cavity comprises a shape that is adapted to produce a radial slot in the first component that extends radially over at least 50% of the width of the first component in the region of the slot and wherein at least one border of the second component is constituted by a front side of the second component that is arranged on top of the first component, wherein a rib is formed on the top surface of the first component, right before the front side of the second component and extending along the border of the second component lying on top of the first component.

The device comprises preferably a robot that is adapted to insert the window glass into the first cavity and/or to remove the glass with the first component from the first cavity and/or to insert the window glass with the first component into the second cavity and/or to remove the glass with the first and second component from the second cavity and the mold.

### DRAWINGS

Obviously a device for producing a window surround according to the invention can have all the features necessary to produce a window surround as described above. Especially it is advantageous if the first cavity has a groove arranged in a way, to form the rib on the top surface of the first component described above.

The present invention is explained in greater detail below with reference to the illustrative embodiments given in the schematic figures of the drawing, in which:
- Fig. 1a: shows the first component of a window surround according to the invention together with an inserted window glass in a front view;
- Fig. 1b, 1c: show a cross section according to Fig. 1a section A-A (in Fig. 1b) and a detail from Fig. 1b (in Fig. 1c);
- Fig. 2a, 2b, 2c: show cross sections according to Fig. 1 section A-A in three different scenarios;
- Fig. 3: shows a three-dimensional detail view of a window surround according to the invention;
- Fig. 4a, 4b, 4c: show the detail view of Fig. 3 seen from above (in 4a), a cross section from Fig. 4a according to A-A (in 4b), and a further detailed view from Fig. 4b (in 4c).

### DESCRIPTION

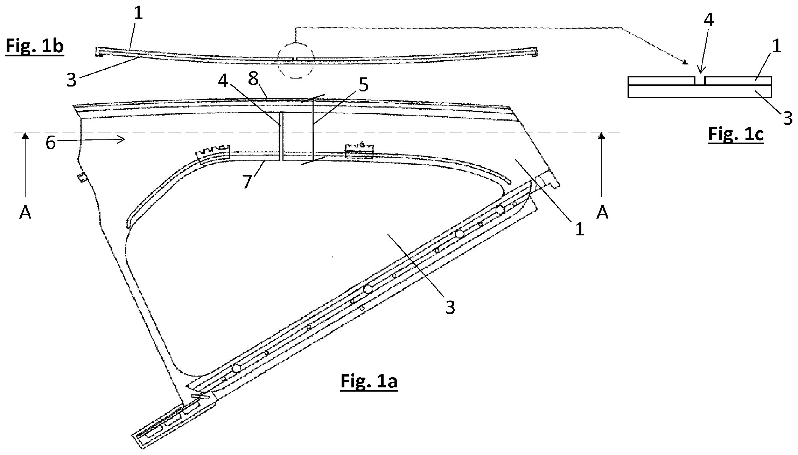

Fig. 1a shows the first component 1 of a window surround according to the invention together with an inserted window glass 3 in a front view. Fig. 1b shows a cross section according to Fig. 1a section A-A and Fig. 1c shows a detail from Fig. 1b, where the arrangement of a radial slot 4 on the first component 1 can be seen.

The window surround comprises the first component 1 made of a hard first material, namely Polypropylene (PP or PP with GF), and a second component 2 made of a weak second material, namely a thermoplastic elastomer (TPE family), that is over molded over the first component 1, but not depicted in Fig. 1.

The first component 1 constitutes a circumferential support frame for holding the window glass 3. The first component 1 is injection molded onto the window glass 3. The slot 4 is formed in the first component 1 approximately in the middle of an essentially straight frame part 6. The window surround depicted in Fig. 1 consists essentially of three straight parts, arranged in a triangle, the straight frame part 6 being one of these three straight parts. It is of course possible to have four straight parts, arranged in a square or rectangle, and the straight frame part would be one of the four straight parts.

The radial slot 4 extends radially over approximately 90% of the width 5 of the first component 1 in the region of the slot 4. The slot 4 starts at the inside edge 7 of the first component 1, directed towards the center of the triangle, i.e. the support frame, and ends before the outside edge 8 of the first component 1.

As can be seen from the cross section Fig. 1b, the window glass has a curved shape, and the first component 1, comprising the slot 4 in the middle of the cross section, exhibits the same curved shape and therefore fits perfectly to the window glass 3.

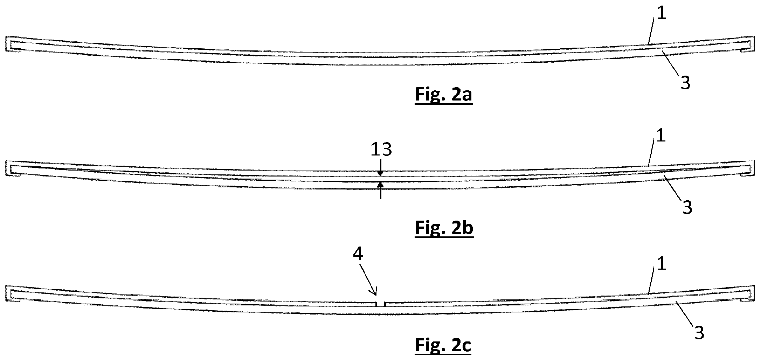

Fig. 2a, 2b and 2c show cross sections which correspond to Fig. 1b and demonstrate the effect of the slot 4.

The first component 1 depicted in Fig. 2a does not comprise a slot, and covers the window glass 3 on its side edges. Fig. 2a depicts the ideal status, with a first component 1 that fits perfectly to the window glass 3.

Without a slot however, the first component 1 in reality tends to shrink after injection molding as soon as the Polypropylene gets cold, thereby producing a gap 13, of e.g. approximately 3 mm (depending on the glass shape), between the first component 1 and the glass 3 - see Fig. 2b.

In order to avoid the gap, the radial slot 4 is introduced into the first component 1 when it is injection molded. The first component 1 is therefore free to stay in contact with the glass 3 and avoids the gap due to material shrinkage after cooling - see Fig. 2c.

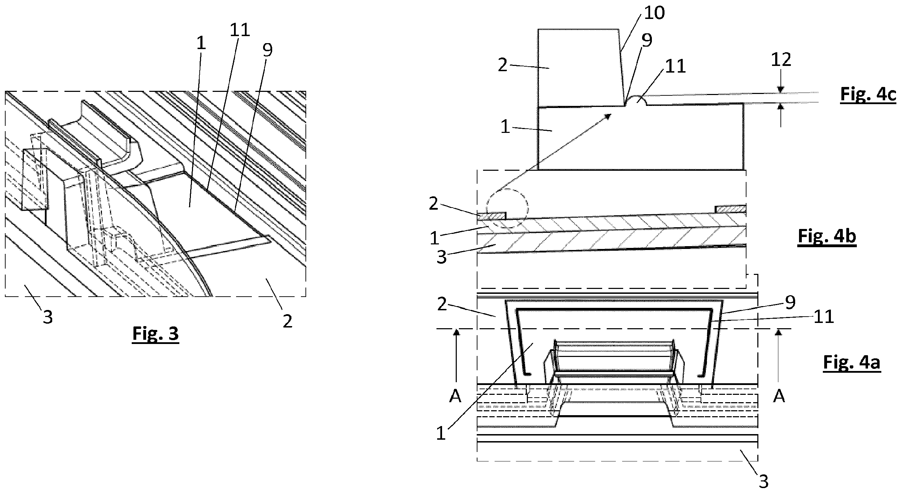

Fig. 3 shows a three-dimensional detail view of a window surround according to the invention including the second component 2, which is over molded on the first component 1.

Fig. 4a, 4b, 4c show the same detail as Fig. 3 from other perspectives (4a, 4b) and in further detail (4c).

### LIST OF REFERENCE SIGNS

### DRAWINGS

As can be seen in Fig. 3, a border 9 of the second component 2 is constituted by a front side 10 of the second component 2 that is arranged on top of the first component 1. To avoid burrs at this border, a rib 11 having a height 12 of e.g. approximately 0,2 mm is formed on the top surface of the first component 1, right before the front side 10 of the second component 2 and extending along the border 9 of the second component 2 lying on top of the first component 1.

### LIST OF REFERENCE SIGNS

- 1: first component
- 2: second component
- 3: window glass
- 4: radial slot
- 5: width
- 6: straight frame part
- 7: inside edge
- 8: outside edge
- 9: border
- 10: front side
- 11: rib
- 12: height of rib
- 13: gap

## Claims

1. Method to produce a window surround for a vehicle, wherein the window surround comprises a first component (1) made of a hard first material and a second component (2) made of a weak second material, wherein the first component (1) constitutes a circumferential support frame for holding a window glass (3), wherein the second component (2) constitutes a circumferential sealing element,
wherein the first and second component (1, 2) are produced by multi-component injection molding, wherein after injection molding of the first component (1) onto the window glass (3), the second component (2) is molded over the first component (1),
wherein a radial slot (4) which extends over the whole height of the first component (1) is formed in the first component (1), wherein the radial slot (4) extends radially over at least 50% of the width (5) of the first component in the region of the slot (4) and
wherein at least one border (9) of the second component (2) is constituted by a front side (10) of the second component (2) that is arranged on top of the first component (1), wherein a rib (11) is formed on the top surface of the first component (1), right before the front side (10) of the second component (2) and extending along the border (9) of the second component (2) lying on top of the first component (1).

2. Method according to Claim 1,
**characterized in that** the radial slot (4) extends radially over at least 80 % of the width (5), preferably over about 90 % of the width (5) of the first component (1).

3. Method according to any of the preceding Claims,
**characterized in that** the window surround comprises at least one essentially straight frame part (6) and the slot (4) is formed in said straight frame part (6).

4. Method according to Claim 3,
**characterized in that** the slot (4) is formed approximately in the middle of the straight frame part (6).

5. Method according to any of the preceding Claims,
**characterized in that** the slot (4) starts at the inside edge (7) of the first component (1) and ends before the outside edge (8) of the first component (1).

6. Method according to any of the preceding Claims,
**characterized in that** the first component (1) comprises Polypropylene (PP) and/or the second component (2) is a thermoplastic elastomer (TPE).

7. Method according to any of the preceding Claims,
**characterized in that** the radial slot (4) is produced during injection molding of the first component (1), especially by using a shape in the mold that is adapted to produce the radial slot (4).

8. Method according to any of the preceding Claims,
**c h ara c t e rized in** that in a first step, the first component (1) is insert molded on a window glass (3), and in a second step, the second component (2) is over molded onto the first component (1).

9. Window surround for a vehicle, wherein the window surround comprises a first component (1) made of a hard first material and a second component (2) made of a weak second material, wherein the first component (1) constitutes a circumferential support frame for holding a window glass (3), wherein the second component (2) constitutes a circumferential sealing element, wherein the first and second component (1, 2) are produced by multi-component injection molding, wherein after injection molding of the first component (1) onto the window glass (3), the second component (2) is molded over the first component (1) and the window glass (3),
wherein the first component has a radial slot (4) which extends over the whole height of the first component (1), wherein the radial slot (4) extends radially over at least 50% of the width (5) of the first component (1) in the region of the slot (4) and
wherein at least one border (9) of the second component (2) is constituted by a front side (10) of the second component (2) that is arranged on top of the first component (1), wherein the first component (1) has a rib (11) on its top surface, right before the front side (10) of the second component (2) and extending along the border (9) of the second component (2) lying on top of the first component (1).

10. Device for producing a window surround for a vehicle, wherein the window surround comprises a first component (1) made of a hard first material and a second component (2) made of a weak second material, wherein the first component (1) constitutes a circumferential support frame for holding a window glass (3), wherein the second component (2) constitutes a circumferential sealing element, wherein the device comprises a first cavity with a first injection unit for injection molding the first component (1) onto the window glass (3) and the device comprises a second cavity with a second injection unit for over molding the second component (2) onto the first component (1), wherein the first cavity comprises a shape that is adapted to produce a radial slot (4) which extends over the whole height of the first component (1) is formed in the first component (1) that extends radially over at least 50% of the width (5) of the first component (1) in the region of the slot (4) and wherein at least one border (9) of the second component (2) is constituted by a front side (10) of the second component (2) that is arranged on top of the first component (1), wherein a rib (11) is formed on the top surface of the first component (1), right before the front side (10) of the second component (2) and extending along the border (9) of the second component (2) lying on top of the first component (1).

## Patentansprüche

1. Verfahren zum Herstellen eines Fensterrahmens für ein Fahrzeug, wobei der Fensterrahmen eine aus einem harten ersten Material hergestellte erste Komponente (1) und eine aus einem schwachen zweiten Material hergestellte zweite Komponente (2) umfasst, wobei die erste Komponente (1) einen umlaufenden Stützrahmen zum Halten eines Fensterglases (3) bildet, wobei die zweite Komponente (2) ein umlaufendes abdichtendes Element bildet, wobei die erste und zweite Komponente (1, 2) durch Mehrkomponentenspritzgießen produziert werden,
wobei nach dem Spritzgießen der ersten Komponente (1) auf das Fensterglas (3) die zweite Komponente (2) durch Überspritzen auf die erste Komponente (1) aufgebracht wird,
wobei ein radialer Schlitz (4), der sich über die gesamte Höhe der ersten Komponente (1) erstreckt, in der ersten Komponente (1) ausgebildet ist, wobei sich der radiale Schlitz (4) radial über mindestens 50 % der Breite (5) der ersten Komponente in der Region des Schlitzes (4) erstreckt, und
wobei mindestens ein Rand (9) der zweiten Komponente (2) von einer vorderen Seite (10) der zweiten Komponente (2) ausgebildet ist, die oben auf der ersten Komponente (1) gebildet wird, wobei auf der oberen Oberfläche der ersten Komponente (1) eine Rippe (11) ausgebildet ist, direkt vor der vorderen Seite (10) der zweiten Komponente (2), und sich entlang des Randes (9) der zweiten Komponente (2) erstreckt, die oben auf der ersten Komponente (1) liegt.

2. Verfahren nach Anspruch 1, **dadurch gekennzeichnet, dass** sich der radiale Schlitz (4) radial über mindestens 80 % der Breite (5) erstreckt, vorzugsweise über etwa 90 % der Breite (5) der ersten Komponente (1).

3. Verfahren nach einem der vorangehenden Ansprüche, **dadurch gekennzeichnet, dass** der Fensterahmen mindestens ein im Wesentlichen gerades Rahmenteil (6) umfasst und der Schlitz (4) in dem geraden Rahmenteil (6) ausgebildet ist.

4. Verfahren nach Anspruch 3, **dadurch gekennzeichnet, dass** der Schlitz (4) etwa in der Mitte des geraden Rahmenteils (6) ausgebildet ist.

5. Verfahren nach einem der vorangehenden Ansprüche, **dadurch gekennzeichnet, dass** der Schlitz (4) an der inneren Kante (7) der ersten Komponente (1) beginnt und vor der äußeren Kante (8) der ersten Komponente (1) endet.

6. Verfahren nach einem der vorangehenden Ansprüche, **dadurch gekennzeichnet, dass** die erste Komponente (1) Polypropylen (PP) umfasst und/oder die zweite Komponente (2) ein thermoplastisches Elastomer (TPE) ist.

7. Verfahren nach einem der vorangehenden Ansprüche, **dadurch gekennzeichnet, dass** der radiale Schlitz (4) während des Spritzgießens der ersten Komponente (1) produziert wird, insbesondere durch Verwenden einer Ausprägung in der Form, die dazu ausgelegt ist, den radialen Schlitz (4) zu produzieren.

8. Verfahren nach einem der vorangehenden Ansprüche, **dadurch gekennzeichnet, dass** in einem ersten Schritt die erste Komponente (1) auf ein Fensterglas (3) spritzgegossen wird, und in einem zweiten Schritt die zweite Komponente (2) durch Überspritzen auf die erste Komponente (1) aufgebracht wird.

9. Fensterrahmen für ein Fahrzeug, wobei der Fensterrahmen eine aus einem harten ersten Material hergestellte erste Komponente (1) und eine aus einem schwachen zweiten Material hergestellte zweite Komponente (2) umfasst, wobei die erste Komponente (1) einen umlaufenden Stützrahmen zum Halten eines Fensterglases (3) bildet, wobei die zweite Komponente (2) ein umlaufendes abdichtendes Element bildet, wobei die erste und zweite Komponente (1, 2) durch Mehrkomponentenspritzgießen produziert werden, wobei nach dem Spritzgießen der ersten Komponente (1) auf das Fensterglas (3) die zweite Komponente (2) durch Überspritzen auf die erste Komponente (1) und das Fensterglas (3) aufgebracht wird,
wobei die erste Komponente einen radialen Schlitz (4) aufweist, der sich über die gesamte Höhe der ersten Komponente (1) erstreckt, wobei sich der radiale Schlitz (4) radial über mindestens 50 % der Breite (5) der ersten Komponente (1) in der Region des Schlitzes (4) erstreckt, und
wobei mindestens ein Rand (9) der zweiten Komponente (2) von einer vorderen Seite (10) der zweiten Komponente (2) gebildet wird, die oben auf der ersten Komponente (1) angeordnet ist, wobei auf der oberen Oberfläche der ersten Komponente (1) eine Rippe (11) ausgebildet ist, direkt vor der vorderen Seite (10) der zweiten Komponente (2), und sich entlang des Randes (9) der zweiten Komponente (2) erstreckt, die oben auf der ersten Komponente (1) liegt.

10. Vorrichtung zum Herstellen eines Fensterrahmens für ein Fahrzeug, wobei der Fensterrahmen eine aus einem harten ersten Material hergestellte erste Komponente (1) und eine aus einem schwachen zweiten Material hergestellte zweite Komponente (2) umfasst, wobei die erste Komponente (1) einen umlaufenden Stützrahmen zum Halten eines Fensterglases (3) bildet, wobei die zweite Komponente (2) ein umlaufendes abdichtendes Element bildet, wobei die Vorrichtung einen ersten Hohlraum umfasst mit einer ersten Spritzgießeinheit zum Spritzgießen der ersten Komponente (1) auf das Fensterglas (3) und die Vorrichtung einen zweiten Hohlraum mit einer zweiten Spritzgießeinheit zum Überspritzen der zweiten Komponente (2) auf die erste Komponente (1) umfasst, wobei der erste Hohlraum eine Ausprägung umfasst, die dazu ausgelegt ist, einen radialen Schlitz (4) zu produzieren, der sich über die gesamte Höhe der ersten Komponente (1) erstreckt und in der ersten Komponente (1) ausgebildet ist, der sich radial über mindestens 50 % der Breite (5) der ersten Komponente (1) in der Region des Schlitzes (4) erstreckt, und wobei mindestens ein Rand (9) der zweiten Komponente (2) von einer vorderen Seite (10) der zweiten Komponente (2) gebildet wird, die oben auf der ersten Komponente (1) angeordnet ist, wobei auf der oberen Oberfläche der ersten Komponente (1) eine Rippe (11) ausgebildet ist, direkt vor der vorderen Seite (10) der zweiten Komponente (2), und sich entlang des Randes (9) der zweiten Komponente (2) erstreckt, die oben auf der ersten Komponente (1) liegt.

## Revendications

1. Procédé de fabrication d'une bordure de fenêtre pour un véhicule, la bordure de fenêtre comprenant un premier composant (1) constitué d'un premier matériau dur et un second composant (2) constitué d'un second matériau faible, le premier composant (1) constituant un cadre de support périphérique pour maintenir une vitre de fenêtre (3), le second composant (2) constituant un élément de joint périphérique,
le premier et le second composant (1, 2) étant produits par moulage par injection à plusieurs composants, le second composant (2) étant moulé sur le premier composant (1) après moulage par injection du premier composant (1) sur la vitre de fenêtre (3),
une fente radiale (4) qui s'étend sur toute la hauteur du premier composant (1) étant formée dans le premier composant (1), la fente radiale (4) s'étendant radialement sur au moins 50 % de la largeur (5) du premier composant dans la région de la fente (4) et
au moins une bordure (9) du second composant (2) étant constituée par une face avant (10) du second composant (2) qui est disposée sur le dessus du premier composant (1), une barrière (11) étant formée sur la surface supérieure du premier composant (1), juste avant la face avant (10) du second composant (2) et s'étendant le long de la bordure (9) du second composant (2) reposant sur le dessus du premier composant (1).

2. Procédé selon la revendication 1, **caractérisé en ce que** la fente radiale (4) s'étend radialement sur au moins 80 % de la largeur (5), de préférence sur environ 90 % de la largeur (5) du premier composant (1).

3. Procédé selon l'une quelconque des revendications précédentes, **caractérisé en ce que** la bordure de fenêtre comprend au moins une partie de cadre essentiellement droite (6) et la fente (4) est formée dans ladite partie de cadre droite (6).

4. Procédé selon la revendication 3, **caractérisé en ce que** la fente (4) est formée approximativement au milieu de la partie de cadre droite (6).

5. Procédé selon l'une quelconque des revendications précédentes, **caractérisé en ce que** la fente (4) commence au bord intérieur (7) du premier composant (1) et se termine avant le bord extérieur (8) du premier composant (1).

6. Procédé selon l'une quelconque des revendications précédentes, **caractérisé en ce que** le premier composant (1) comprend du polypropylène (PP) et/ou le second composant (2) est un élastomère thermoplastique (TPE).

7. Procédé selon l'une quelconque des revendications précédentes, **caractérisé en ce que** la fente radiale (4) est produite pendant le moulage par injection du premier composant (1), en particulier en utilisant une forme dans le moule qui est adaptée pour produire la fente radiale (4) .

8. Procédé selon l'une quelconque des revendications précédentes, **caractérisé en ce que**, dans une première étape, le premier composant (1) est inséré en étant moulé sur une vitre de fenêtre (3), et dans une seconde étape, le second composant (2) est surmoulé sur le premier composant (1).

9. Bordure de fenêtre pour un véhicule, la bordure de fenêtre comprenant un premier composant (1) fait d'un premier matériau dur et un second composant (2) fait d'un second matériau faible, le premier composant (1) constituant un cadre de support périphérique pour maintenir une vitre de fenêtre (3), le second composant (2) constituant un élément de joint périphérique, le premier et le second composant (1, 2) étant fabriqués par moulage par injection à plusieurs composants, le second composant (2) étant moulé sur le premier composant (1) et la vitre de fenêtre (3) après moulage par injection du premier composant (1) sur la vitre de fenêtre (3),
le premier composant ayant une fente radiale (4) qui s'étend sur toute la hauteur du premier composant (1), la fente radiale (4) s'étendant radialement sur au moins 50 % de la largeur (5) du premier composant (1) dans la région de la fente (4) et
au moins une bordure (9) du second composant (2) étant constituée par une face avant (10) du second composant (2) qui est disposée sur le dessus du premier composant (1), le premier composant (1) présentant une barrière (11) sur sa surface supérieure, juste avant la face avant (10) du second composant (2) et s'étendant le long de la bordure (9) du second composant (2) reposant sur le dessus du premier composant (1).

10. Dispositif pour la fabrication d'une bordure de fenêtre pour un véhicule, la bordure de fenêtre comprenant un premier composant (1) en un premier matériau dur et un second composant (2) en un second matériau faible, le premier composant (1) constituant un cadre de support périphérique pour maintenir une vitre de fenêtre (3), le second composant (2) constituant un élément de joint périphérique, le dispositif comprenant une première cavité avec une première unité d'injection pour mouler par injection le premier composant (1) sur la vitre de fenêtre (3) et le dispositif comprend une seconde cavité avec une seconde unité d'injection pour surmouler le second composant (2) sur le premier composant (1), la première cavité comprenant une forme qui est adaptée pour produire une fente radiale (4) qui s'étend sur toute la hauteur du premier composant (1), qui est formée dans le premier composant (1) et qui s'étend radialement sur au moins 50 % de la largeur (5) du premier composant (1) dans la région de la fente (4) et au moins une bordure (9) du second composant (2) étant constituée par un côté avant (10) du second composant (2) qui est disposé sur le premier composant (1), une barrière (11) étant formée sur la surface supérieure du premier composant (1), juste avant la face avant (10) du second composant (2) et s'étendant le long du bord (9) du second composant (2) reposant sur le dessus du premier composant (1).
